# EUROPEAN PATENT APPLICATION

(11) **EP 3 364 516 A1**
(43) Date of publication of application: **22.08.2018**
(21) Application number: 16855630.6
(22) Date of filing: 12.09.2016
(51) Int. Cl.: H02J 7/02

(54) **MULTI-COIL WIRELESS CHARGING METHOD AND DEVICE AND SYSTEM THEREFOR**

(30) Priority: 14.10.2015 KR 20150143232
(71) Applicant: LG INNOTEK CO. LTD, Jung-gu Seoul 04637 (KR)
(72) Inventor: LEE, Yun Bok, Seoul 04637 (KR); LEE, Jong Heon, Seoul 04637 (KR)
(74) Representative: DREISS Patentanwälte PartG mbB
(86) International application number: PCT/KR2016/010224
(87) International publication number: WO 2017/065413

(57) **Abstract**

The present invention relates to a multi-coil wireless charging method and a device and a system therefor, a wireless power transmitter for wirelessly transmitting power to a wireless power receiver, according to one embodiment of the present invention, comprising: a power transmission unit which comprises at least two or more transmission coils; a control unit which controls so that a predetermined first detection signal for detecting the existence of a wireless power receiver is transmitted through the transmission coils in a predetermined order; and a modulation/demodulation unit which, if a predetermined first signal strength indicator associated with the first detection signal is received from the wireless power receiver, transmits the received first signal strength indicator to the control unit, wherein the control unit may control so that a second detection signal is transmitted through the transmission coils through which the first signal strength indicator was received. Thus, the present invention has a merit of enabling a quicker and more accurate detection of a wireless power receiver.

## Description

### [Technical Field]

Embodiments relate to a wireless power transmission technique, and more particularly, to a multi-coil wireless charging method for minimizing a time required for a wireless power transmitter equipped with a plurality of transmission coils to recognize a wireless power receiver, and a device and system therefor.

### [Background Art]

Recently, as information and communication technology rapidly develops, a ubiquitous society based on information and communication technology is being formed.

To allow information communication devices to be connected anytime and anywhere, sensors equipped with a computer chip having a communication function should be installed in all facilities. Therefore, supply of power to these devices or sensors is a new challenge. In addition, as the kinds of portable devices such as Bluetooth handsets and music players like iPods, as well as mobile phones, rapidly increase in number, charging batteries thereof has required time and effort. As a way to address this issue, wireless power transmission technology has recently drawn attention.

Wireless power transmission (or wireless energy transfer) is a technology for wirelessly transmitting electric energy from a transmitter to a receiver based on the induction principle of a magnetic field. Back in the 1800s, electric motors or transformers based on electromagnetic induction began to be used. Thereafter, a method of transmitting electric energy by radiating an electromagnetic wave, such as a radio wave, laser, a high frequency wave or a microwave, was tried. Electric toothbrushes and some common wireless shavers are charged through electromagnetic induction.

Wireless energy transmission techniques introduced up to now may be broadly divided into magnetic induction, electromagnetic resonance, and RF transmission employing a short wavelength radio frequency.

In the magnetic induction scheme, when two coils are arranged adjacent to each other and current is applied to one of the coils, a magnetic flux generated at this time generates electromotive force in the other coil. This technology is being rapidly commercialized mainly for small devices such as mobile phones. In the electromagnetic induction scheme, power of up to several hundred kilowatts (kW) may be transmitted with high efficiency, but the maximum transmission distance is less than or equal to 1 cm. As a result, devices are generally required to be placed adjacent to a charger or a pad, which is disadvantageous.

The magnetic resonance scheme uses an electric field or a magnetic field instead of employing an electromagnetic wave or current. The magnetic resonance scheme is advantageous in that the scheme is safe for other electronic devices or the human body since it is hardly influenced by electromagnetic waves. However, the distance and space available for this scheme are limited, and the energy transfer efficiency of the scheme is rather low.

The short-wavelength wireless power transmission scheme (simply, RF transmission scheme) takes advantage of the fact that energy can be transmitted and received directly in the form of radio waves. This technique is an RF-based wireless power transmission scheme using a rectenna. A rectenna, which is a compound word of antenna and rectifier, refers to a device that converts RF power directly into direct current (DC) power. That is, the RF scheme is a technique of converting AC radio waves into DC waves. Recently, with improvement in efficiency, commercialization of RF technology has been actively researched.

The wireless power transmission technique is employable in various industries including IT, railroads, and home appliance industries as well as the mobile industry.

Recently, wireless power transmitters equipped with a plurality of coils have been introduced to increase the recognition rate of a wireless power receiver placed on a charging bed. However, the conventional wireless power transmitter equipped with a plurality of coils sequentially transmits detection signals, including, for example, a ping signal used for the electromagnetic induction scheme and a beacon signal used for the electromagnetic resonance scheme.

In particular, the conventional wireless power transmitter equipped with a plurality of conventional transmission coils is controlled to repeatedly transmit a detection signal sequentially through the respective transmission coils a predetermined number of times, for example, twice, to reduce recognition errors for the wireless power receiver and to determine transmission coils exhibiting good charging efficiency.

However, in the method of repeatedly transmitting the detection signal sequentially a predetermined number of times through each of the transmission coils, a transmission coil to be used for the wireless power receiver is identified only after a preset detection signal transmission procedure is completed. Therefore, it takes a lot of time to recognize the wireless power receiver. Moreover, the power of the capacitor of the charged wireless power receiver is discharged through the detection signal, and thus the wireless power receiver fails to transmit a predetermined response signal including a signal strength indicator to the wireless power transmitter. As a result, the receiver fails to be recognized.

### [Disclosure]

### [Technical Problem]

Therefore, the present disclosure has been made in view of the above problems, and embodiments provide a multi-coil wireless charging method and a device and system therefor.

Embodiments provide a multi-coil wireless charging method capable of increasing the recognition rate of a wireless power receiver and minimizing the time required for recognition, and a device and system therefor.

The technical objects that can be achieved through the embodiments are not limited to what has been particularly described hereinabove and other technical objects not described herein will be more clearly understood by persons skilled in the art from the following detailed description.

### [Technical Solution]

The present disclosure may provide a multi-coil wireless charging method, and a device and system therefor.

In one embodiment, a wireless power transmitter for wirelessly transmitting power to a wireless receiver, the wireless power transmitter may include a power transmission unit comprising at least two transmission coils, a controller configured to perform a control operation such that a predetermined first detection signal for detecting presence of the wireless power receiver is transmitted through the transmission coils in a predetermined order, and a modulation/demodulation unit configured to transfer, upon receiving a predetermined first signal strength indicator corresponding to the first detection signal from the wireless power receiver, the received first signal strength indicator to the controller, wherein the controller may control a second detection signal so as to be transmitted through the transmission coils through which the first signal strength indicator has been received.

In addition, the controller may control the power so as to be transmitted to the wireless power receiver through a transmission coil through which a second signal strength indicator corresponding to the second detection signal has been received.

In addition, when the second signal strength indicator has been received through a plurality of transmission coils, the controller may select a transmission coil to be used for power transmission to the wireless power receiver, based on the second signal strength indicator.

In addition, the second signal strength indicator may be intensity information about output power of a rectifier mounted on the wireless power receiver.

In addition, the wireless power transmitter may further include a power conversion unit configured to convert power applied from a power source and transmit the converted power to the power transmission unit, wherein the power conversion unit may include at least one of a DC/DC converter configured to convert DC power applied from the power source to DC power of a predetermined intensity, a power sensor configured to measure the intensity of the converted DC power obtained by the DC/DC converter, and an amplifier configured to amplify the converted DC power.

In addition, the wireless power transmitter may further include a frequency generator configured to generate a predetermined frequency signal to insert an AC component into the converted DC power.

In addition, the wireless power transmitter may further include a switch configured to control the power converted by the power conversion unit so as to be transmitted through one of the at least two transmission coils.

In addition, the wireless power transmitter further include a detection signal transmission timer configured to control a time to transmit the detection signal through the transmission coils, wherein, when the transmission time of the detection signal arrives, the controller may control the switch to transmit the detection signal through the corresponding transmission coils.

In addition, the detection signal may be a digital ping signal defined in a WPC standard or a PMA standard.

In another embodiment, a method for transmitting wireless power to a wireless power receiver by a wireless power transmitter having a plurality of transmission coils may include transmitting a first detection signal sequentially through the plurality of transmission coils, checking whether a first signal strength indicator corresponding to the first detection signal has been received from the wireless power receiver, and transmitting a predetermined second detection signal through a transmission coil through which the first signal strength indicator has been received.

In addition, the method may further include controlling the power so as to be transmitted to the wireless power receiver through a transmission coil through which a second signal strength indicator corresponding to the second detection signal has been received.

In addition, the method may further include selecting, when the second signal strength indicator has been received through a plurality of transmission coils, a transmission coil to be used for power transmission to the wireless power receiver, based on the second signal strength indicator.

In addition, the second signal strength indicator is intensity information about output power of a rectifier mounted on the wireless power receiver.

In addition, the method may further include controlling a switch to transmit the first and second detection signals through one of the plurality of transmission coils.

In addition, the method may further include identifying a transmission time of the first and second detection signals based on a timer, wherein the switch may be controlled at the identified transmission time to transmit the first and second detection signals through the corresponding transmission coil.

In addition, the detection signal is a digital ping signal defined in a WPC standard or a PMA standard.

In another embodiment, a computer-readable recording medium having recorded thereon a program for executing one of the wireless power transmission methods described above may be provided.

The above-described aspects of the present disclosure are merely a part of preferred embodiments of the present disclosure. Those skilled in the art will derive and understand various embodiments reflecting the technical features of the present disclosure from the following detailed description of the present disclosure.

### [Advantageous Effects]

The method and device according to the embodiments have the following effects.

Embodiments provide a multi-coil wireless charging method and a device and system therefor.

In addition, embodiments provide a multi-coil wireless charging method capable of increasing the recognition rate of a wireless power receiver and minimizing the time required for recognition, and a device and system therefor.

In addition, embodiments provide a multi-coil wireless charging method capable of preventing unnecessary transmission of a detection signal and minimizing the time required for recognition of a wireless power receiver and the consumption of standby power by adaptively determining a transmission coil to transmit a secondary detection signal based on a signal strength indicator detected during transmission of a primary detection signal through a plurality of transmission coils, and a device and system therefor.

It will be appreciated by those skilled in the art that that the effects that can be achieved through the embodiments of the present disclosure are not limited to those described above and other advantages of the present disclosure will be more clearly understood from the following detailed description.

### [Description of Drawings]

The accompanying drawings, which are included to provide a further understanding of the disclosure, illustrate embodiments of the disclosure. It is to be understood, however, that the technical features of the present disclosure are not limited to specific drawings, and the features disclosed in the drawings may be combined with each other to constitute a new embodiment.
FIG. 1 is a diagram illustrating a detection signal transmission procedure in a wireless power transmitter according to the related art.
FIG. 2 is a state transition diagram illustrating a wireless power transmission procedure defined in the WPC standard.
FIG. 3 is a state transition diagram illustrating a wireless power transmission procedure defined in the PMA standard.
FIG. 4 is a block diagram illustrating an internal structure of a wireless power transmitter according to an embodiment of the present disclosure.
FIG. 5 is a flowchart illustrating a method for transmitting wireless power by a wireless power transmitter according to an embodiment of the present disclosure.
FIG. 6 is a block diagram illustrating a structure of a wireless power transmitter according to an embodiment of the present disclosure.
FIGs. 7 to 8 are flowcharts illustrating a method for transmitting wireless power by a wireless power transmitter having a plurality of transmission coils according to an embodiment of the present disclosure.

### [Best Mode]

A wireless power transmitter for wirelessly transmitting power to a wireless power receiver according to a first embodiment of the present disclosure may include a power transmission unit including at least two transmission coils, a controller configured to control a predetermined first detection signal for detecting presence of a wireless power receiver so as to be transmitted through the transmission coils in a predetermined order, and a modulation/demodulation unit configured to transmit, when a predetermined first signal strength indicator corresponding to the first detection signal is received from the wireless power receiver, the received first signal strength indicator to the controller.

### [Mode for Invention]

Hereinafter, an apparatus and various methods to which embodiments of the present disclosure are applied will be described in detail with reference to the drawings. As used herein, the suffixes "module" and "unit" are added or used interchangeably to facilitate preparation of this specification and are not intended to suggest distinct meanings or functions.

In the description of the embodiments, it is to be understood that, when an element is described as being "on"/"over" or "beneath"/"under" another element, the two elements may directly contact each other or may be arranged with one or more intervening elements present therebetween. Also, the terms "on"/"over" or "beneath"/"under" may refer to not only an upward direction but also a downward direction with respect to one element.

For simplicity, in the description of the embodiments, "wireless power transmitter," "wireless power transmission apparatus," "transmission terminal," "transmitter," "transmission apparatus," "transmission side," "wireless power transfer apparatus," "wireless power transferer," and the like will be interchangeably used to refer to an apparatus for transmitting wireless power in a wireless power system. In addition, "wireless power reception apparatus," "wireless power receiver," "reception terminal," "reception side," "reception apparatus," "receiver," and the like will be used interchangeably to refer to an apparatus for receiving wireless power from a wireless power transmission apparatus.

The transmitter according to the present disclosure may be configured as a pad type, a cradle type, an access point (AP) type, a small base station type, a stand type, a ceiling embedded type, a wall-mounted type, or the like. One transmitter may transmit power to a plurality of wireless power reception apparatuses. To this end, the transmitter may include at least one wireless power transmission means. Here, the wireless power transmission means may employ various wireless power transmission standards which are based on the electromagnetic induction scheme for charging according to the electromagnetic induction principle meaning that a magnetic field is generated in a power transmission terminal coil and current is induced in a reception terminal coil by the magnetic field. Here, the wireless power transmission means may include wireless charging technology using electromagnetic induction schemes defined by the Wireless Power Consortium (WPC) and the Power Matters Alliance (PMA), which are wireless charging technology standard organizations.

In addition, a receiver according to an embodiment of the present disclosure may include at least one wireless power reception means, and may receive wireless power from two or more transmitters simultaneously. Here, the wireless power reception means may include wireless charging technologies of electromagnetic induction schemes defined by the Wireless Power Consortium (WPC) and the Power Matters Alliance (PMA), which are wireless charging technology standard organizations.

The receiver according to the present disclosure may be employed in small electronic devices including a mobile phone, a smartphone, a laptop computer, a digital broadcasting terminal, a PDA (Personal Digital Assistant), a PMP (Portable Multimedia Player), a navigation device, an electric toothbrush, an electronic tag, a lighting device, a remote control, a fishing float, and wearable devices such as a smart watch. However, the embodiments are not limited thereto. The applications may include any devices which are equipped with a wireless power transmission means and have a rechargeable battery.

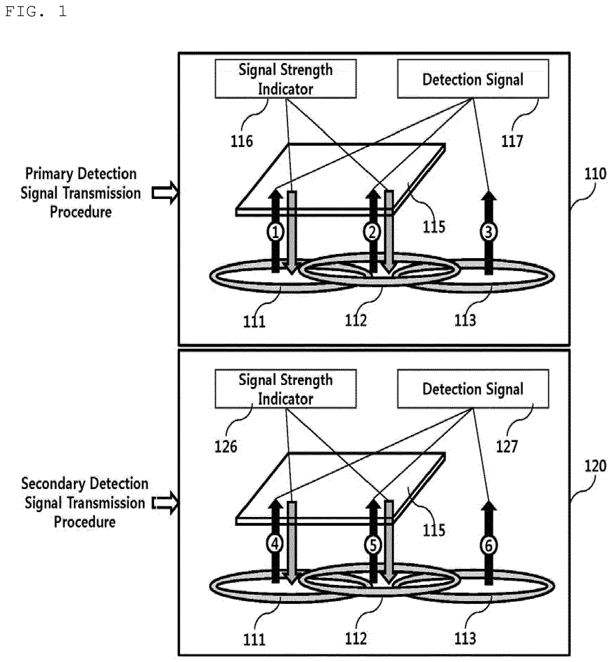

FIG. 1 is a diagram illustrating a detection signal transmission procedure in a wireless power transmitter according to the related art.

Referring to FIG. 1, the wireless power transmitter may be equipped with three transmission coils 111, 112, and 113. Each transmission coil may have a region partially overlapping the other transmission coils, and the wireless power transmitter sequentially transmits predetermined detection signals 117, 127 for sensing presence of a wireless power receiver through the respective transmission coils, for example, digital ping signals, in a predefined order.

As shown in FIG. 1, the wireless power transmitter may sequentially transmit detection signals 117 through a primary detection signal transmission procedure, which is indicated by reference numeral 110, and identify transmission coils 111 and 112 receiving a signal intensity indicator or signal strength indicator 116 from the wireless power receiver 115. Subsequently, the wireless power transmitter may sequentially transmit detection signals 127 through a secondary detection signal transmission procedure, which is indicated by reference numeral 120, identify a transmission coil exhibiting better power transmission efficiency (or charging efficiency), namely better alignment between the transmission coil and the reception coil, between the transmission coils 111 and 112 receiving the signal strength indicator 126, and perform a control operation to transmit power through the identified transmission coil, that is, to perform wireless charging.

Causing the wireless power transmitter to perform two detection signal transmission procedures as shown in FIG. 1 allows more accurate identification of a transmission coil that is better aligned with the reception coil of the wireless power receiver.

If the signal strength indicators 116 and 126 are received by the first transmission coil 111 and the second transmission coil 112 as indicated by reference numerals 110 and 120 of FIG. 1, the wireless power transmitter selects a transmission coil exhibiting the best alignment based on the signal strength indicator 126 received by each of the first transmission coil 111 and the second transmission coil 112 and performs wireless charging using the selected transmission coil.

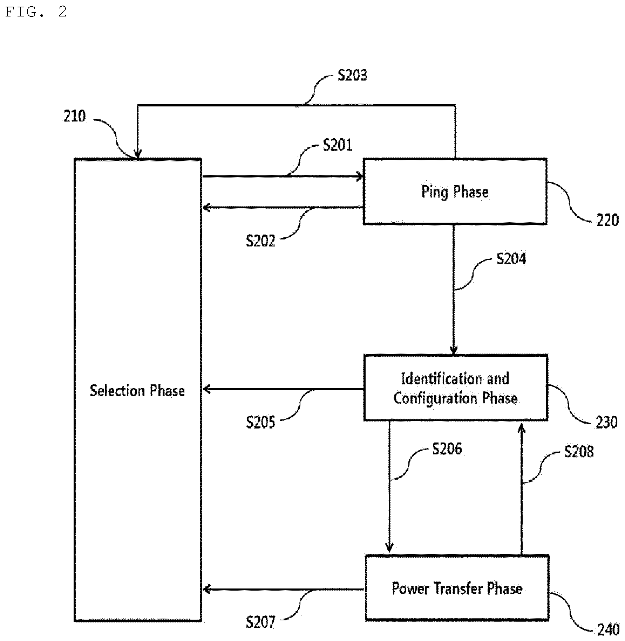

FIG. 2 is a state transition diagram illustrating a wireless power transmission procedure defined in the WPC standard.

Referring to FIG. 2, power transmission from a transmitter to a receiver according to the WPC standard is broadly divided into a selection phase 210, a ping phase 220, an identification and configuration phase 230, and a power transfer phase 240.

The selection phase 210 may be a phase in which transition occurs when a specific error or a specific event is detected while power transmission begins or is maintained. Here, the specific error and the specific event will be clarified through the following description. Further, in the selection phase 210, the transmitter may monitor whether an object is present at the interface surface. When the transmitter detects an object being placed on the interface surface, it may transition to the ping phase 220 (S201). In the selection phase 210, the transmitter may transmit an analog ping signal of a very short pulse and sense whether there is an object in the active area of the interface surface based on the change in current of the transmission coils.

When the transmitter detects an object in the ping phase 220, it activates the receiver and transmits a digital ping to identify whether the receiver is a WPC standard-compatible receiver. If the transmitter does not receive a response signal (e.g., a signal strength indicator) for the digital ping from the receiver in the ping phase 220, it may transition back to the selection phase 210 (S202). In addition, if the transmitter receives, from the receiver, a signal indicating completion of power transmission, that is, a charge completion signal, the transmitter may transition to the selection phase 210 (S203).

Once the ping phase 220 is complete, the transmitter may transition to the identification and configuration phase 230 for identifying the receiver and collecting configuration and state information about the receiver (S204).

In the identification and configuration phase 230, the transmitter may transition to the selection phase 210 if an unexpected packet is received (unexpected packet), a desired packet is not received for a predefined time (timeout), there is an error in packet transmission (transmission error) or no power transfer contract is made (no power transfer contract) (S205).

Once identification and configuration of the receiver are complete, the transmitter may transition to the power transfer phase 240, wherein wireless power is transmitted (S206).

In the power transfer phase 240, the transmitter may transition to the selection phase 210 if an unexpected packet is received (unexpected packet), a desired packet is not received for a predefined time (timeout), a violation of a pre-established power transmission contract occurs (power transfer contract violation), and charging is complete (S207).

In addition, in the power transfer phase 240, if the power transfer contract needs to be reconfigured according to change in the state of the transmitter, the transmitter may transition to the identification and configuration phase 230 (S208).

The above-mentioned power transmission contract may be set based on the state and characteristics information about the transmitter and the receiver. For example, the transmitter state information may include information on a maximum amount of transmittable power and information on a maximum number of acceptable receivers, and the receiver state information may include information on the required power.

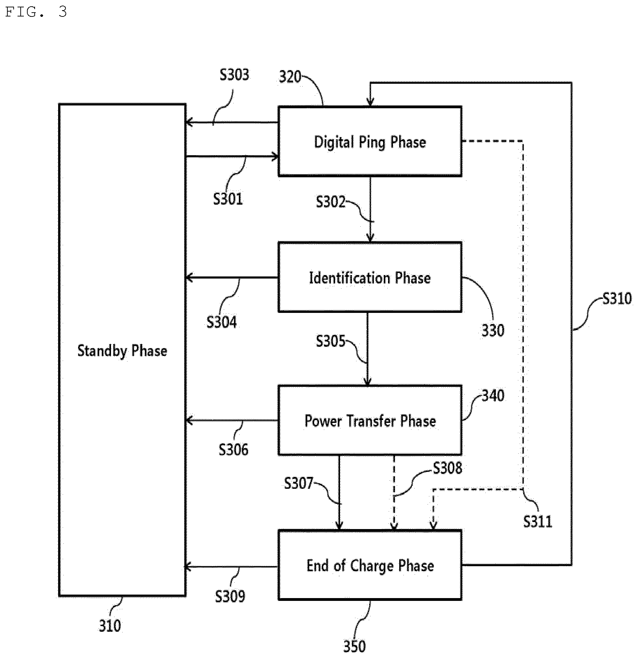

FIG. 3 is a state transition diagram illustrating a wireless power transmission procedure defined in the PMA standard.

Referring to FIG. 3, power transmission from a transmitter to a receiver according to the PMA standard is broadly divided into a Standby phase 310, a Digital Ping phase 320, an Identification phase 330, a Power Transfer phase 340, and an End of Charge phase 350.

The Standby phase 310 may be a phase for performing transition when a specific error or a specific event is detected while a receiver identification procedure for power transmission is performed or power transmission is maintained. Here, the specific error and the specific event will be clarified through the following description. In addition, in the Standby phase 310, the transmitter may monitor whether an object is present on a charging surface. When the transmitter detects an object being placed on the charging surface or an RXID retry is in progress, it may transition to the Digital Ping phase 320 (S301) . Here, RXID is a unique identifier assigned to a PMA-compatible receiver. In the Standby phase 310, the transmitter may transmit an analog ping very short pulse, and sense, based on the change in current of the transmission coil, whether there is an object in the active area of the interface surface, for example, the charging bed.

Upon transitioning to the Digital Ping phase 320, the transmitter sends a digital ping signal to identify whether the detected object is a PMA-compatible receiver. When sufficient power is supplied to the reception terminal by the digital ping signal transmitted by the transmitter, the receiver may modulate the received digital ping signal according to the PMA communication protocol and transmit a predetermined response signal to the transmitter. Here, the response signal may include a signal strength indicator indicating the strength of the power received by the receiver. When a valid response signal is received in the Digital Ping phase 320, the receiver may transition to the Identification phase 330 (S302).

If the response signal is not received or it is determined that the receiver is not a PMA-compatible receiver (i.e., Foreign Object Detection (FOD)) in the Digital Ping phase 320, the transmitter may transition to the Standby phase 310 (S303). As an example, a foreign object (FO) may be a metallic object including a coin and a key.

In the Identification phase 330, the transmitter may transition to the Standby phase 310 if the receiver identification procedure fails or needs to be re-performed and if the receiver identification procedure is not completed for a predefined time (S304).

If the transmitter succeeds in identifying the receiver, the transmitter may transition from the Identification phase 330 to the Power Transfer phase 340 and initiate charging (S305).

In the Power Transfer phase 340, the transmitter may transition to the Standby phase 310 if a desired signal is not received within a predetermined time (timeout), a foreign object (FO) is detected, or the voltage of the transmission coil exceeds a predefined reference value (S306).

In addition, in the Power Transfer phase 340, the transmitter may transition to the End of Charge phase 350 if the temperature detected by a temperature sensor provided in the transmitter exceeds a predetermined reference value (S307).

In the End of Charge phase 350, if the transmitter determines that the receiver has been removed from the charging surface, the transmitter may transition to the Standby state 310 (S309).

In addition, if a temperature measured in the over-temperature state after lapse of a predetermined time drops below a reference value, the transmitter may transition from the End of Charge phase 350 to the Digital Ping phase 320 (S310).

In the Digital Ping phase 320 or the Power Transfer phase 340, the transmitter may transition to the End of Charge phase 350 when an End of Charge (EOC) request is received from the receiver (S308 and S311).

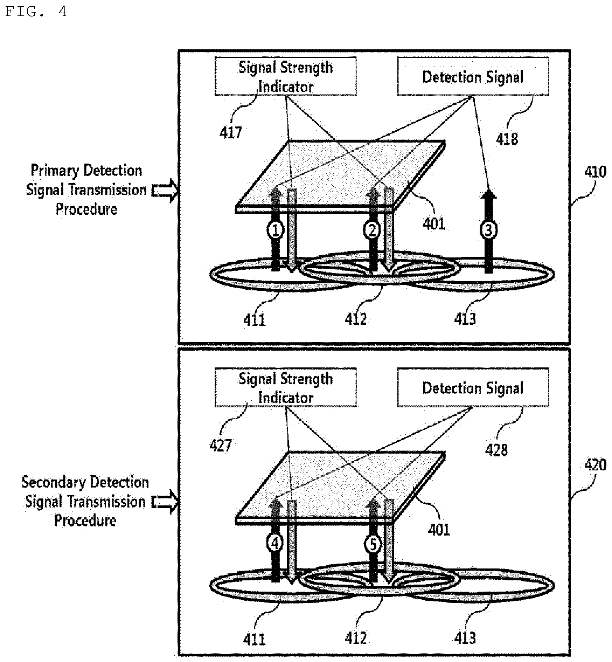

FIG. 4 is a diagram illustrating a wireless power transmission procedure in a wireless power transmitter equipped with a plurality of transmission coils according to an embodiment of the present disclosure.

Referring to FIG. 4, the wireless power transmitter may be equipped with three transmission coils 411, 412, and 413. Each transmission coil may have a region partially overlapping the other transmission coils. The wireless power transmitter may transmit an analog ping signal through each of the transmission coils or may simultaneously transmit, when presence of a conductive object is detected using a predetermined detection sensor, predetermined detection signals 417 and 427, for example, digital ping signals, for identifying whether the object is a wireless power receiver capable of being wirelessly charged, in a predefined order. In particular, as shown in FIG. 4, the wireless power transmitter according to this embodiment may transmit a detection signal 418 sequentially through all the transmission coils in a primary detection signal transmission procedure 410. However, in a secondary detection signal transmission procedure 420, the wireless power transmitter may control the detection signal 428 so as to be transmitted only through the transmission coils 411 and 412 through which the signal strength indicator has been received in the primary detection signal transmission procedure 410.

As shown in FIG. 4, the wireless power transmitter may sequentially transmit the detection signal 417 through the primary detection signal transmission procedure indicated by reference numeral 410 and identify the transmission coils 411 and 412 through which the signal strength indicator 417 has been received from the receiver 401. Subsequently, the wireless power transmitter may sequentially transmit the detection signal 427 using the first transmission coil 411 and the second transmission coil 412 in the secondary detection signal transmission procedure, which is indicated by reference numeral 420, identify a transmission coil exhibiting a better power transmission efficiency (or charging efficiency), namely a better alignment between the transmission coil and the reception coil, between the transmission coils 411 and 412 receiving the signal strength indicator 426, and perform a control operation to transmit power through the identified transmission coil, that is, to perform wireless charging. Here, the detection signals 418 and 428 may be digital ping signals defined in the WPC standard and the PMA standard.

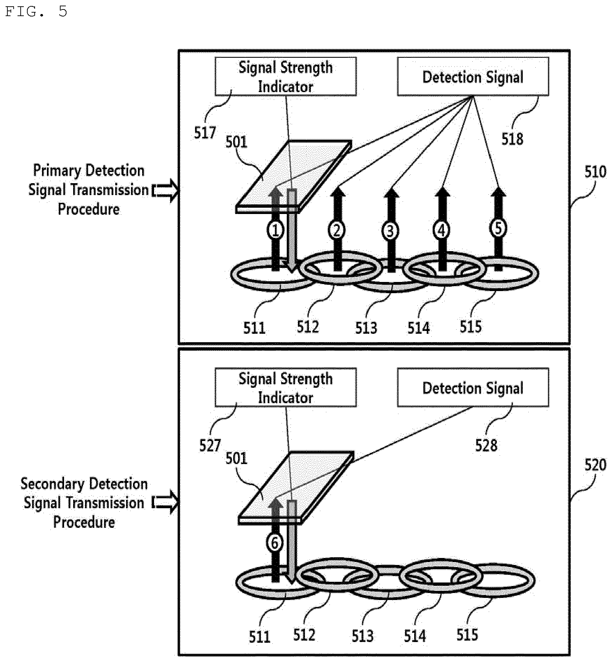

FIG. 5 is a diagram illustrating a wireless power transmission procedure in a wireless power transmitter equipped with a plurality of transmission coils according to another embodiment of the present disclosure.

Referring to FIG. 5, the wireless power transmitter may be equipped with five transmission coils 511 to 515 and may sequentially transmit detection signals 518 through the first to fifth transmission coils 511 to 515 during the primary detection signal transmission procedure 510. Then, the wireless power transmitter may receive, from the wireless power receiver 501, a signal strength indicator 517 corresponding to the detection signal transmitted through the first transmission coil 511.

In this case, in the secondary detection signal transmission procedure 520, the wireless power transmitter may perform a control operation such that the detection signal 528 is transmitted only through the first transmission coil 511 through which the signal strength indicator 517 has been received in the primary detection signal transmission procedure and is not transmitted through the second to fifth transmission coils 512 and 515.

In the second detection signal transmission procedure 520, when the wireless power transmitter recognizes reception of the signal strength indicator 527 corresponding to the detection signal 528 transmitted through the first transmission coil 511, the wireless power transmitter may perform wireless charging using the coil 511.

While it is illustrated in FIGs. 4 to 5 that the wireless power transmitter sequentially transmits the detection signal through the first to n-th transmission coils during the first detection signal transmission procedure 410, 510, where n is 3 or 5, this is merely one embodiment. In another embodiment of the present disclosure, the wireless power transmitter may sequentially transmit the detection signal through the odd-numbered transmission coils, and then sequentially transmit the detection signal through even-numbered transmission coils.

In addition, while the transmission coils mounted on the wireless power transmitter are illustrated in FIGs. 4 and 5 as being arranged in a line, this is merely one embodiment. It should be noted that a plurality of transmission coils may be arranged in various shapes such as a rectangular shape, a triangular shape, a circular shape, and a rhombus shape on the charging bed of the wireless power transmitter. In this case, it should be noted that the transmission order of detection signals transmitted by the wireless power transmitter through the provided transmission coils in the primary detection signal transmission procedure may vary depending on the design of the product.

A wireless power receiver placed on the charging bed of the wireless power transmitter may move. Thereby, the transmission coil through which the signal strength indicator is received in the first detection signal transmission procedure may differ from the transmission coil through which the signal strength indicator is received in the second detection signal transmission procedure. In this case, the wireless power receiver may further perform a tertiary detection signal transmission procedure for the transmission coil(s) through which the signal strength indicator has been received during the secondary detection signal transmission procedure.

If signal strength indicators are received from the same transmission coil(s) during the serial detection signal transmission procedures, the wireless power transmitter may select a transmission coil having a better charging efficiency based on the received signal strength indicators, and perform wireless charging through the selected transmission coil.

In addition, when signal strength indicators are received through a plurality of transmission coils, the wireless power transmitter may compare the signal strength indicators with a predetermined reference value, and perform a control operation according to the result of comparison such that the transmission coil corresponding to the signal strength indicator having the greatest value among the transmission coil(s) through which the signal indicators greater than or equal to the reference value have been received is used for wireless charging.

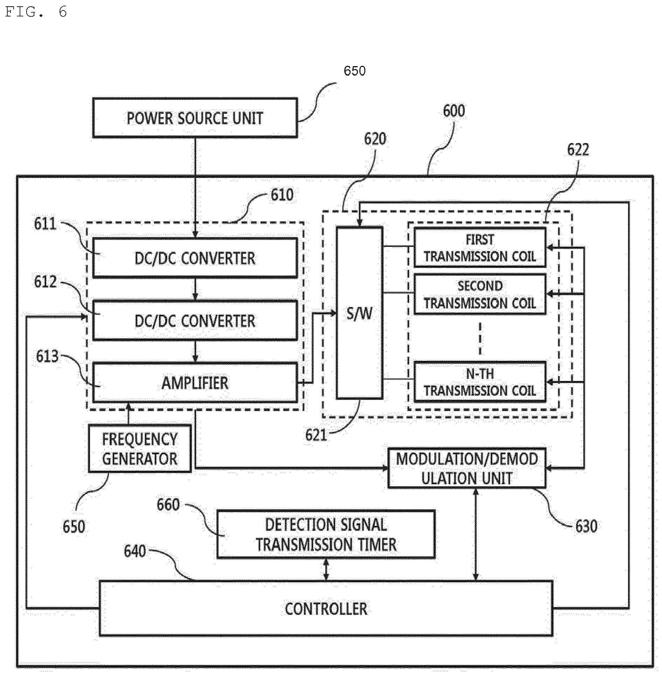

FIG. 6 is a block diagram illustrating a structure of a wireless power transmitter according to an embodiment of the present disclosure.

Referring to FIG. 6, the wireless power transmitter 600 may include a power conversion unit 610, a power transmission unit 620, a modulation/demodulation unit 630, a controller 640, a frequency generator 650, and a detection signal transmission timer 660. It should be noted that the aforementioned elements of the wireless power transmitter 600 are not necessarily essential elements, and thus the wireless power transmitter may be configured to include more or fewer elements.

As shown in FIG. 6, when power is supplied from the power source unit 670, the power conversion unit 610 may convert the power to a predetermined intensity.

To this end, the power conversion unit 610 may include a DC/DC converter 611, a power sensor 612, and an amplifier 613.

The DC/DC conversion unit 611 may function to convert DC power supplied from the power source unit 670 into DC power having a predetermined intensity according to a control signal of the controller 640.

The power sensor 612 may measure the voltage/current and the like of the DC-converted power and provide the same to the controller 640.

The controller 640 may adaptively cut off power supplied from the power source unit 670 or power supplied to the amplifier 613, based on the value of the voltage/current measured by the power sensor 612. To this end, a predetermined power cutoff circuit for cutting off power supplied from the power source unit 670 or power supplied to the amplifier 613 may be further provided at one side of the power conversion unit 610.

The frequency generator 650 may generate a predetermined frequency signal for inserting an AC component into the DC power amplified by the amplifier 613.

The power transmission unit 620 may include a switch 621 for controlling transmission of the output power of the amplifier 613 to a transmission coil, and first to n-th transmission coils 622.

The controller 640 may control the switch 621 to sequentially transmit the detection signals through the first to n-th transmission coils 622 during the primary detection signal transmission procedure. At this time, the controller 640 may identify, through the detection signal transmission timer 660, time to transmit the detection signals. When the time detection signal transmission time is reached, the controller 640 may control the switch 621 to transmit the detection signals through the corresponding transmission coils.

In addition, the controller 640 may identify the transmission coil(s) through which the signal strength indicators have been received during the primary detection signal transmission procedure and may control the switch 621 to transmit the detection signal only through the identified transmission coil(s) during the secondary detection signal transmission procedure.

The modulation/demodulation unit 630 may modulate a control signal generated by the controller 640 and transmit the modulated control signal to the transmission coil 622 or may demodulate the signal received from the transmission coil 622 and transmit the demodulated signal to the controller 640. For example, the demodulated signal may contain, but is not limited to, a signal strength indicator. In another embodiment, the demodulated signal may include various kinds of state information about the wireless power receiver. Here, the state information about the wireless power receiver may include state information for determining completion of charging, state information for determining overvoltage/overcurrent/overheat of the wireless power receiver, and state information for determining the intensity of power received by the wireless power receiver, including, for example, information about the intensity of the output voltage and/or current of the rectifier.

In particular, the modulation/demodulation unit 630 may identify the transmission coil through which the demodulated signal strength indicator has been received, and transmit the identified transmission coil and the demodulated signal strength indicator corresponding to the identified transmission coil to the controller 640.

The controller 640 may determine a transmission coil through which wireless charging is to be performed, based on the signal strength indicator demodulated by the modulation/demodulation unit 630.

Subsequently, the controller 640 may control the operations of the power conversion unit 610 and the power transmission unit 620 such that power can be transmitted through the determined transmission coil.

For example, the wireless power transmitter 600 may acquire the signal strength indicator through in-band communication with the wireless power receiver using the same frequency as used for wireless power transmission.

In an example, the wireless power transmitter 600 may not only transmit wireless power, but also exchange various kinds of information with the wireless power receiver, using the transmission coil 622. In another example, it should be noted that the wireless power transmitter 600 may include separate coils corresponding to each transmission coil 622 and perform in-band communication with the wireless power receiver using the separate coils.

The wireless power transmitter 600 according to an embodiment of the present disclosure may further include a predetermined frequency generator (not shown) for transmitting power or a control signal through a specific frequency band.

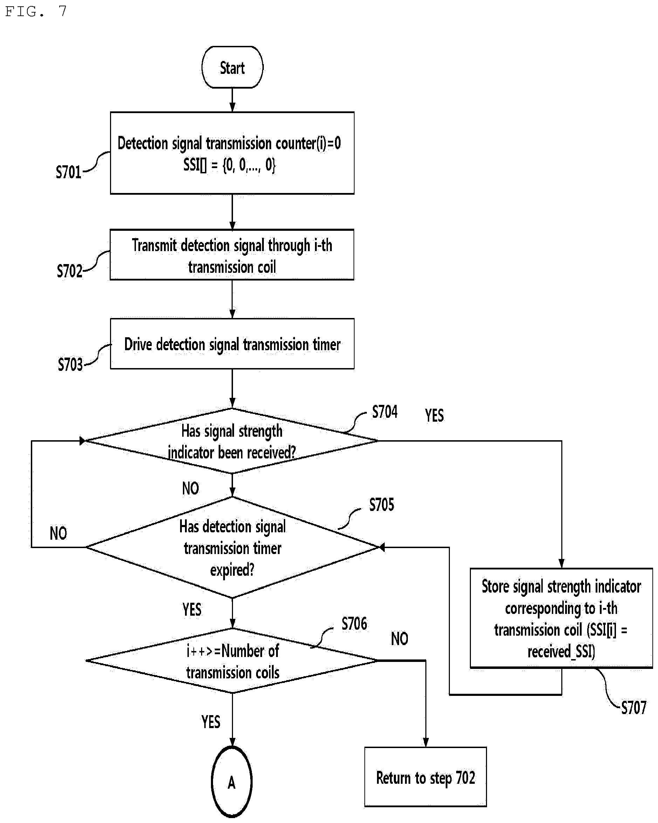

FIGs. 7 to 8 are flowcharts illustrating a method for transmitting wireless power by a wireless power transmitter having a plurality of transmission coils according to an embodiment of the present disclosure.

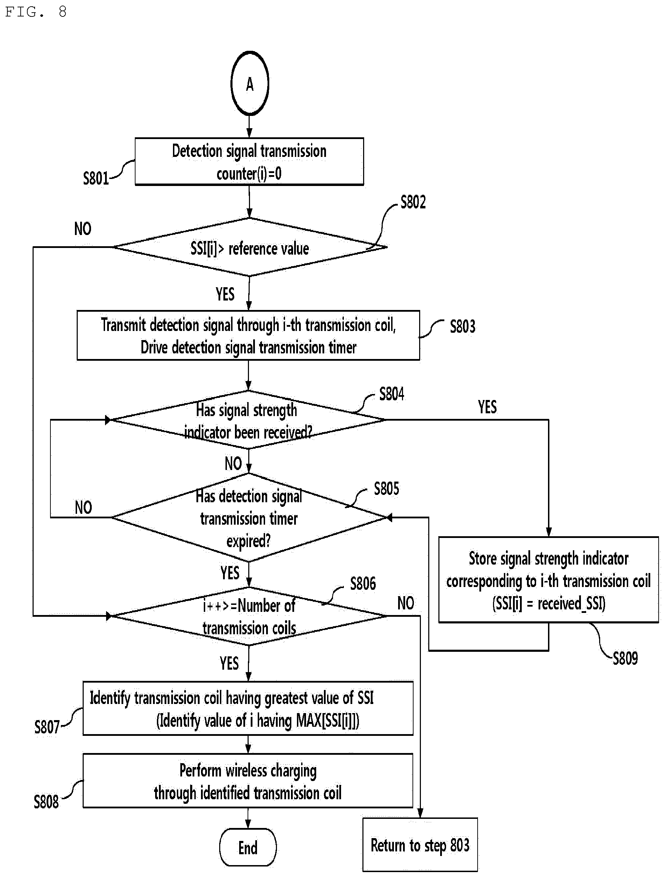

Specifically, FIG. 7 illustrates the primary detection signal transmission procedure, and FIG. 8 illustrates the secondary detection signal transmission procedure and a procedure of selecting an optimum transmission coil to be used for wireless charging according to the procedure.

Referring to FIG. 7, when power is applied to the wireless power transmitter, the wireless power transmitter may initialize a predetermined detection signal transmission counter i to 0 and initialize a signal strength indicator array SSI[] having a size corresponding to the number of the installed transmission coils to 0 (S701).

The wireless power transmitter may transmit a detection signal, which may be a digital ping signal according to the WPC standard or the PMA standard, through an i-th transmission coil (S702).

The wireless power transmitter may drive a predetermined detection signal transmission timer and check whether a signal strength indicator has been received through the i-th transmission coil (S703 and S704). Here, the detection signal transmission timer is a timer for controlling the transmission period of the detection signal.

If the signal strength indicator has been received as a result of checking, the wireless power transmitter may store the signal strength indicator corresponding to the i-th transmission coil (S707) and perform step 705, which will be described later. Here, the signal strength indicator corresponding to the i-th transmission coil may be recorded in the array SSI[i] initialized in step 701 described above. That is, the signal strength indicator received_SSI received through the i-th transmission coil may be recorded in SSI[i].

If the signal strength indicator has not been received as a result of checking in step 704, the wireless power transmitter may check whether the detection signal transmission timer has expired (S705).

If the detection signal transmission timer has not expired as a result of checking, the wireless power transmitter may return to step 704. If the detection signal transmission timer has expired as a result of checking in step 705, the wireless power transmitter may increase the value of i by 1 (i=i+1 or i++), and compare whether the increased value of i is greater than or equal to the number of transmitting coils (S706).

If the increased value of i is greater than or equal to the number of transmitting coils as a result of the comparison, the wireless power transmitter may perform the procedure of FIG. 8, which will be described later. Otherwise, the wireless power transmitter may return to step 702 described above to transmit the detection signal through the i-th transmission coil.

Referring to FIG. 8, the wireless power transmitter may initialize the detection signal transmission counter i to 0 again and perform a comparison operation to determine whether the value of SSI[i] exceeds a predetermined reference value (S801 and S802). Here, the reference value may be, but is not limited to, the intensity of the minimum power (or the level of the minimum voltage or the intensity of the minimum current) required to allow a load connected to (or mounted on) the wireless power receiver to be normally charged. It should also be noted that the reference value may be set differently depending on the type of the wireless power receiver and the wireless power transmitter.

If the value of SSI[i] exceeds the predetermined reference value as a result of comparison, the wireless power transmitter may transmit the detection signal through the i-th transmission coil and drive the detection signal transmission timer (S803).

Subsequently, the wireless power transmitter may check whether a signal strength indicator corresponding to the detection signal transmitted through the i-th transmission coil has been received (S804).

If the signal strength indicator has been received as a result of checking, the wireless power transmitter may store the signal strength indicator corresponding to the i-th transmission coil (S809) and perform step 805, which will be described later.

If the signal strength indicator has not been received as a result of checking in step 804, the wireless power transmitter may check whether the detection signal transmission timer has expired (S805).

If the detection signal transmission timer has expired as a result of checking, the wireless power transmitter may increase the value of i by 1 (i=i+1 or i++) and then perform a comparison operation to determine whether the increased value of i is greater than or equal to the number of transmission coils (S806).

If the increased value of i is greater than or equal to the number of transmission coils as a result of comparison, the wireless power transmitter may identify a transmission coil having the greatest value of SSI and perform a control operation to perform wireless charging through the identified transmission coil (S807 and S808).

If the increased value of i is less than the number of transmission coils as a result of comparison in step 806, the wireless power transmitter may return to step 803 to transmit the detection signal through the i-th transmission coil.

If the value of the signal strength indicator received through the i-th transmission coil is less than or equal to a predetermined reference value in step 802, the wireless power transmitter may perform step 806 described above.

The method according to embodiments of the present disclosure described may be implemented as a program to be executed on a computer and stored in a computer-readable recording medium. Examples of the computer-readable recording medium include ROM, RAM, CD-ROM, magnetic tapes, floppy disks, and optical data storage devices, and also include carrier-wave type implementation (e.g., transmission over the Internet).

The computer-readable recording medium may be distributed to a computer system connected over a network, and computer-readable code may be stored and executed thereon in a distributed manner. Functional programs, code, and code segments for implementing the method described above may be easily inferred by programmers in the art to which the embodiments pertain.

It is apparent to those skilled in the art that the present disclosure may be embodied in specific forms other than those set forth herein without departing from the spirit and essential characteristics of the present disclosure.

Therefore, the above embodiments should be construed in all aspects as illustrative and not restrictive. The scope of the disclosure should be determined by the appended claims and their legal equivalents, and all changes coming within the meaning and equivalency range of the appended claims are intended to be embraced therein.

### [industrial Applicability]

The present disclosure relates to a wireless charging technique and is applicable to a wireless power transmission apparatus on which a plurality of transmission coils are mounted to wirelessly transmit power to a wireless power receiver, and a wireless power transmission system including a plurality of wireless power transmission apparatuses.

## Claims

1. A wireless power transmitter for wirelessly transmitting power to a wireless receiver, the wireless power transmitter comprising:
a power transmission unit comprising at least two transmission coils;
a controller configured to perform a control operation such that a predetermined first detection signal for detecting presence of the wireless power receiver is transmitted through the transmission coils in a predetermined order; and
a modulation/demodulation unit configured to transfer, upon receiving a predetermined first signal strength indicator corresponding to the first detection signal from the wireless power receiver, the received first signal strength indicator to the controller,
wherein the controller controls a second detection signal so as to be transmitted through the transmission coils through which the first signal strength indicator has been received.

2. The wireless power transmitter according to claim 1, wherein the controller controls the power so as to be transmitted to the wireless power receiver through a transmission coil through which a second signal strength indicator corresponding to the second detection signal has been received.

3. The wireless power transmitter according to claim 2, wherein, when the second signal strength indicator has been received through a plurality of transmission coils, the controller selects a transmission coil to be used for power transmission to the wireless power receiver, based on the second signal strength indicator.

4. The wireless power transmitter according to claim 3, wherein the second signal strength indicator is intensity information about output power of a rectifier mounted on the wireless power receiver.

5. The wireless power transmitter according to claim 1, further comprising:
a power conversion unit configured to convert power applied from a power source and transmit the converted power to the power transmission unit,
wherein the power conversion unit comprises at least one of:
a DC/DC converter configured to convert DC power applied from the power source to DC power of a predetermined intensity;
a power sensor configured to measure the intensity of the converted DC power obtained by the DC/DC converter; and
an amplifier configured to amplify the converted DC power.

6. The wireless power transmitter according to claim 5, further comprising:
a frequency generator configured to generate a predetermined frequency signal to insert an AC component into the converted DC power.

7. The wireless power transmitter according to claim 5, further comprising:
a switch configured to control the power converted by the power conversion unit so as to be transmitted through one of the at least two transmission coils.

8. The wireless power transmitter according to claim 7, further comprising:
a detection signal transmission timer configured to control a time to transmit the detection signal through the transmission coils,
wherein, when the transmission time of the detection signal arrives, the controller controls the switch to transmit the detection signal through the corresponding transmission coils.

9. The wireless power transmitter according to claim 1, wherein the detection signal is a digital ping signal defined in a WPC standard or a PMA standard.

10. A method for transmitting wireless power to a wireless power receiver by a wireless power transmitter having a plurality of transmission coils, the method comprising:
transmitting a first detection signal sequentially through the plurality of transmission coils;
checking whether a first signal strength indicator corresponding to the first detection signal has been received from the wireless power receiver; and
transmitting a predetermined second detection signal through a transmission coil through which the first signal strength indicator has been received.

11. The method according to claim 10, further comprising:
controlling the power so as to be transmitted to the wireless power receiver through a transmission coil through which a second signal strength indicator corresponding to the second detection signal has been received.

12. The method according to claim 11, further comprising:
selecting, when the second signal strength indicator has been received through a plurality of transmission coils, a transmission coil to be used for power transmission to the wireless power receiver, based on the second signal strength indicator.

13. The method according to claim 11, wherein the second signal strength indicator is intensity information about output power of a rectifier mounted on the wireless power receiver.

14. The method according to claim 10, further comprising:
controlling a switch to transmit the first and second detection signals through one of the plurality of transmission coils.

15. The method according to claim 14, further comprising:
identifying a transmission time of the first and second detection signals based on a timer,
wherein the switch is controlled at the identified transmission time to transmit the first and second detection signals through the corresponding transmission coil.

16. The method according to claim 10, wherein the detection signal is a digital ping signal defined in a WPC standard or a PMA standard.

17. A computer-readable recording medium having recorded thereon a program for executing the wireless power transmission method of claim 10.
